# EUROPEAN PATENT SPECIFICATION

(11) **EP 1 459 896 B1**
(45) Date of publication and mention of the grant of the patent: **15.02.2012**
(21) Application number: 02793408.2
(22) Date of filing: 26.12.2002
(51) Int. Cl.: B41J 2/01, B41M 5/00, C09D 11/00

(54) **INK JET PRINTER**
TINTENSTRAHLDRUCKER
IMPRIMANTE A JET D'ENCRE

(30) Priority: 28.12.2001 JP 2001400800
(43) Date of publication of application: 22.09.2004
(73) Proprietor: KONICA MINOLTA HOLDINGS, INC., Tokyo 100-0005 (JP)
(72) Inventor: MATSUSHIMA, Koji,, Hachioji-shi, Tokyo 192-8505 (JP); MASUMI, Satoshi, Hino-shi, Tokyo 191-8511 (JP)
(74) Representative: Nicholls, Michael John
(86) International application number: PCT/JP2002/013611
(87) International publication number: WO 2003/057488

(56) References cited:
- WO-A-01/17780
- WO-A-02/053384
- JP-A- 5 042 756
- JP-A- 2000 327 980
- US-A1- 2001 052 920

## Description

### Technical Field

The present invention relates to an ink jet printer.

### Background Art

There has been known a UV ink jet printer that carries out printing with use of UV ink curable with irradiation of ultraviolet (UV) rays.

In printing images by the UV ink jet printer, first, recording heads or the like eject and deposit UV ink on a recording medium such as a film, for example, then a UV irradiating means irradiates ultraviolet rays onto the recording medium to cure and fix the UV ink on the recording medium.

Such a UV ink jet printer described above usually uses as the UV irradiating means a high pressure ultraviolet lamp which has high illumination of ultraviolet rays and high curability of the UV ink. This UV ink jet printer can print images even on a recording medium which does not absorb ink at all.

There has been also known an ink jet printer having an excimer laser device which irradiates laser beams as the light to cure the ink (see, for example, patent document 1 or US-A-2001/0052920).
(Patent document 1)
   Japanese Patent Publication (Laid-Open) No. Tokukai-2001-310454 (page 4, FIG. 1)

However, the high pressure UV lamp generates lots of heat because most of supplied electric power is converted into heat. Therefore, a large capacity of power source is needed to secure sufficient illumination for curing the ink, which leads to a problem of increasing a device cost. Additionally, it is needed to provide a duct for exhausting the heat, which produces a problem of increasing a manufacturing cost as well as a large printer size. Meanwhile, if an excimer laser is used as the irradiating means as disclosed in the patent document 1, this also leads to a problem of making a printer size larger.

Further, the temperature rise of a recording medium due to the heat generated by the high pressure UV lamp causes another problem when a recording medium is, for example, plastic base material or the like that is easily deformed by heat, in that curling or melting of the recording medium disables high precision printing. Particularly, when using a shrinkable film that gets close contact with containers or the like by shrinkage with given heat, it has been difficult to print on the medium by the UV ink jet printer because of the medium shrinkage during printing.

It is therefore an object of the invention to provide a small-sized ink jet printer capable of printing on various types of recording mediums at a lower cost.

WO-A1-02/053384 is a document falling under Art. 54(3) EPC and discloses an ink jet printer which utilizes UV curable ink and which uses as a UV radiation source lamps, lasers or LEDs.

The present invention provides an ink jet printer as defined in claim 1.

According to the invention, since the UV irradiating means comprises an LED, irradiation of ultraviolet rays generates little heat, thereby to improve energy efficiency of the UV irradiating means. Accordingly, the ink jet printer can have a smaller capacity of power source and does not need to have a duct or the like for exhausting the heat. As a result, it is possible to lead to a lower cost and small-sized ink jet printer.

Little heat generated with the irradiation of ultraviolet rays from the UV irradiating means does not cause deformation of the recording medium even if the medium is apt to be deformed by the heat. According to the invention, it is possible to print on various types of recording mediums.

As component material of a shrinkable film (thermo-shrinkable synthetic resin film), the following thermo-shrinkable films as generally used for shrinkable labels are applicable: polyethylene-terephthalate film, polystyrene film, vinyl chloride film, polypropylene film and the like.

According to the invention, even if the recording medium is of shrinkable film that shrinks by heating, the little heat generation at the time of irradiation of ultraviolet rays does not raise the temperature of the recording medium so much as it is deformed.

In the ink jet printer, the recording medium may be a long-length film which is in rolled states before and after a printing area.

According to the invention, since the recording medium is a long-length film which is in rolled states before and after a printing area, the volume occupied by the recording medium can be limited, whereby the recording medium can be installed without making the ink jet printer large-sized.

In the ink jet printer, the UV ink may be of a cationic polymerization type.

According to the invention, in addition to the same effects as that of the invention described above, the light intensity necessary to cure the UV ink deposited on the recording medium can be reduced because the UV ink has particularly cationic polymerizable property, while the cationic polymerization type UV ink is more sensitive to ultraviolet rays than radical polymerization type UV ink and oxygen hardly inhibits polymerization. With this reason, it is not needed to increase the number of provided semiconductor laser or LED devices, which act as a lower illumination light source compared with the high pressure UV lamp, whereby irradiation energy necessary to cure the UV ink can be sufficiently given without making the printer large-sized.

### Brief Description of the Drawings

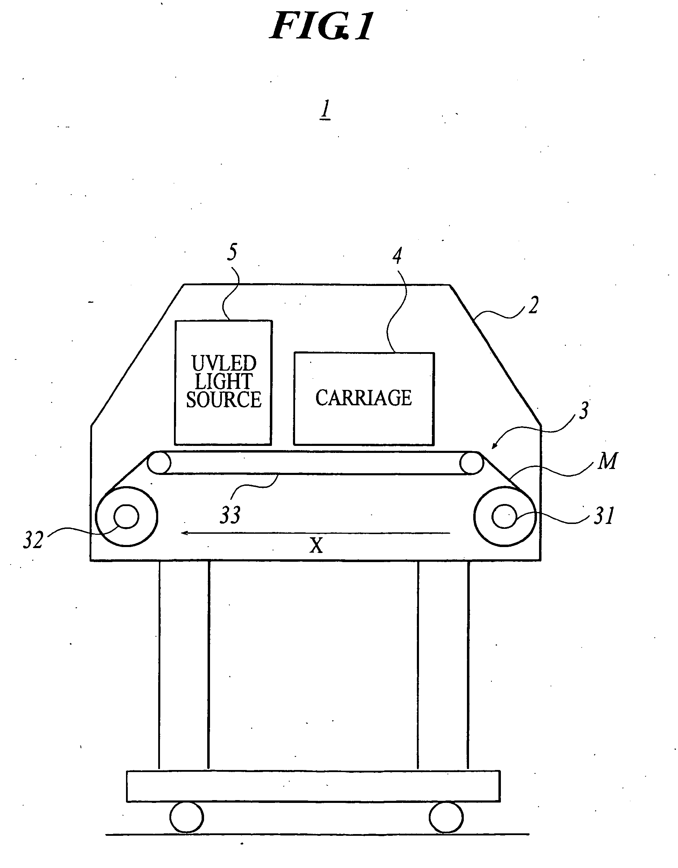

FIG. 1 is a side view showing main portion of the UV ink jet printer according to one embodiment of the invention; and
FIG. 2 is a plan view showing the main portion of the UV ink jet printer of FIG. 1.

### Best Mode for Carrying out the Invention

A description will be given of a UV ink jet printer 1 according to an embodiment of the invention with reference to the drawings. The printer 1 performs printing an image by ejecting and depositing UV ink which is curable by irradiation of ultraviolet (UV) rays, on a recording medium M, and irradiating it after the deposition.

The outer portion of the UV ink jet printer 1 is covered, for example, by a case 2. The ink jet printer includes a recording medium feeding section 3 for feeding the recording medium M during printing, a carriage 4 having recording heads (not shown) mounted thereon for ejecting and depositing the UV ink on the recording medium M, and a UV-LED light source (UV irradiating means) 5 for irradiating ultraviolet rays onto the recording medium M on which the ink is deposited.

The recording medium M is, for example, a long-length thermo-shrinkable polyethylene terephthalate film (shrinkable film) that shrinks by heating. The thickness of the recording medium M is preferably 2 to 100µm, more preferably 6 to 50µm, and further preferably 10 to 30µm.

The recording medium feeding section 3 is, for example, disposed at the lower portion of the case 2, and has a supplying portion 31 for rolling the recording medium M before image printing, a receiving portion 32 for rolling up the medium M after image printing, and a platen 33 arranged substantially horizontally between the supplying portion 31 and the receiving portion 32 for supporting the backside surface of the recording medium M on its upper surface.

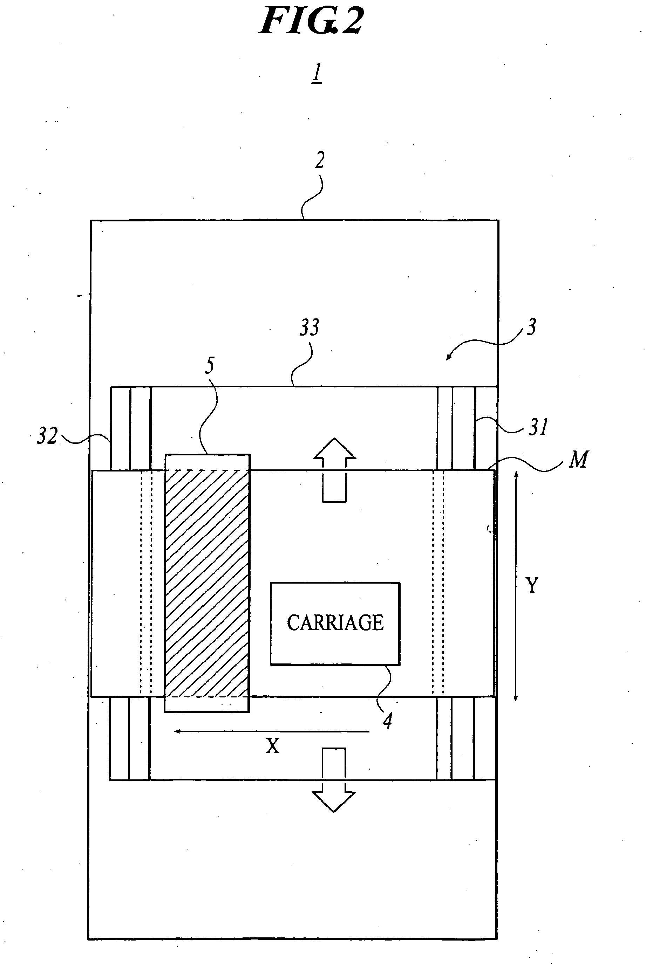

The recording medium feeding section 3, at the time of printing, moves the recording medium M in a direction of the arrow X in FIG. 2 by rolling up the medium M to the receiving portion 32 every time the ejection of UV ink (to be described later) is completed for a predetermined area on the medium M. Meanwhile, the recording medium M is to be printed on the upper surface.

Above the platen 33, the carriage 4 and the UV-LED light source 5 are also provided.

The carriage 4 accommodates a plurality of recording heads corresponding to the number of colors to be used for printing images on the recording medium M, each head having nozzle orifices (not shown) facing downward.

The carriage 4 is reciprocally movable by a moving mechanism (not shown) in a direction of the arrow Y in FIG. 2 with respect to the main body of the UV ink jet printer 1, and repetition of this reciprocal movement constitutes recording head scanning.

Each recording head ejects UV ink supplied from an ink supply means (not shown) through a plurality of nozzle orifices toward the recording medium M with a plurality of jetting means (not shown) provided in the head energized.

The UV ink is composed of, for example, a pigment, a polymerizable compound, and a photo reaction initiator. The UV ink has the property of being cured by cross-linking or polymerization with the initiator acting as a catalyst by irradiation of ultraviolet rays.

The UV ink used in the embodiment will be described below in more detail.

As the UV ink used in the embodiment, a UV ink adapted in "Curing System Utilizing Photo-Acid and Base Generating Agent (Section 1)" or "Photo-induced Alternating Copolymerization (Section 2)" of "Photo-Curing System (Chapter 4)" in "Photo-Curing Technique - Selection and Compounding Condition of Resin and Initiator, and Measurement and Assessment of Curing Degree (Technical Association Information)" can be applied. A UV ink curable by normal radical polymerization can be also applied.

Concretely, the UV ink used in the embodiment is curable by irradiation of ultraviolet rays, and contains as a main component at least polymerizable compound (including well-known polymerizable compound), initiator, color material and the like. However, when the ink which is adapted to the above described "Photo-Induced Alternating Copolymerization (Section 2)" is used as the UV ink in the embodiment, photo reaction initiator may be excluded.

The UV ink is broadly categorized into radical polymerization type UV ink including a radical polymerizable compound, and cationic polymerization type UV ink including a cationic polymerizable compound, as a polymerizable compound. Both types of UV ink are applicable as the UV ink in the embodiment. Hybrid type UV ink which is mixed with the radical polymerization type UV ink and the cationic polymerization type UV ink may also be applied as the ink to be used in the embodiment.

However, the cationic polymerization type UV ink, which is more sensitive to ultraviolet rays and in which oxygen hardly inhibits polymerization, is particularly used in the embodiment because of the superiority in its functionality and generality.

The cationic polymerization type UV ink used in the embodiment is specifically a mixture containing at least a cationic polymerizable compound, e.g., oxetane compound, epoxide compound, vinyl ether compound or the like, a photo cationic initiator and a coloring agent, and has a property curable by irradiation of ultraviolet rays as described above.

The recording heads eject and deposit UV ink droplets to a predetermined area on the recording medium M according to image information sent from a control means (not shown) during the scanning that the heads move from one end to the other end of the recording medium M in the Y direction in FIG. 2.

After carrying out ejection of UV ink to the predetermined area on the recording medium M with proper times of the scanning, the recording medium feeding section 3 properly advances the medium M in the X direction in FIG. 2. Thereafter, the recording heads scan again and eject UV ink to a next predetermined area adjacent to the former predetermined area in the X direction in FIG. 2.

Repetition of the operations described above allows forming an image with UV ink droplets aggregated on the recording medium M.

The UV-LED light source 5 is disposed in a side of the receiving portion 32 with respect to the carriage 4, and has a plurality of LEDs (light emitting diodes) arranged in an LED array (not shown). Each LED can emit light with stable irradiation energy, the peak wavelength of which is within a wavelength range of ultraviolet rays that can cure the UV ink. Each LED is provided so that the emitting portion thereof faces downward. The peak wavelength of the LED is preferably in the range of 200 nm to 420 nm.

The UV-LED light source 5 has a shape substantially equal to the maximum size which can be set by the UV ink jet printer 1 in the predetermined area on the recording medium M to which UV ink is ejected during one time scanning of the recording heads, or a larger shape than the predetermined area so as to cover the whole predetermined area on the medium M.

The wavelength of ultraviolet rays irradiated by the UV-LED light source 5 can be changed, if necessary, by exchanging the LED array. The irradiation energy of ultraviolet rays irradiated by the UV-LED light source 5 can be also changed properly, for example, by control of a control means.

The control means includes a CPU (central processing unit), a ROM (read only memory), a RAM (random access memory) and an interface so as to control each component constructing the UV ink jet printer 1.

A description will now be given of the operations of printing images on the recording medium M by the UV ink jet printer 1.

First, the recording heads eject UV ink toward the recording medium M to start printing images. As described above, the recording heads eject the ink on the medium M by a control of the control means on the basis of the image data to be printed, while moving in the predetermined area on the medium M with the carriage 4 driven. On the other hand, the receiving section 32 rolls up the recording medium M so as to move it in'the X direction in FIG. 2, every time the ejection of UV ink is completed for the predetermined area.

As the recording medium M moves in the X direction in FIG. 2, the predetermined area on the medium M is irradiated by ultraviolet rays under the UV-LED light source 5. The ink on the medium M is rapidly cured upon irradiation of ultraviolet rays and fixed on the medium M. The wavelength and the irradiation energy of ultraviolet rays emitted from the light source 5 are properly set depending on the material of the recording medium M and the kind of UV ink used for printing images.

By repeating the operations explained above, images are printed on the recording medium M.

As described above, according to the UV ink jet printer 1 in the embodiment, because the UV-LED light source 5 has an LED array as a light source, it generates little heat when irradiating ultraviolet rays, whereby energy efficiency of the UV-LED light source 5 is improved. Therefore, the UV ink jet printer 1 can have a smaller capacity of power source and does not need to have a duct or the like for exhausting the heat. As a result, it is possible to provide a lower cost and small sized printer 1.

Additionally, the little heat generated with the irradiation of ultraviolet rays by the UV-LED light source 5 does not cause deformation of the recording medium M even if the medium M tends to be deformed by the heat. As a result, the printer permits printing on various kinds of recording mediums M.

Further, even if the recording medium M is a polyethylene terephthalate shrinkable film that shrinks with heating, little heat generation during irradiation of ultraviolet rays does not raise surrounding temperature so much as the recording medium M is deformed.

In addition, since the recording medium M is a long-length film and is rolled at positions before and after printing an image, the volume occupied by the recording medium M can be limited. Therefore, the recording medium M can be installed on the UV ink jet printer 1 without making the printer large-sized.

Further, because the cationic polymerization type UV ink is applied as the UV ink, the light intensity necessary to cure the UV ink deposited on the recording medium M can be reduced. Therefore, irradiation energy necessary to cure the UV ink can be sufficiently given without making the UV ink jet printer 1 large-sized which may be required by increasing the number of LEDs each of which is a lower illumination light source in comparison with the high pressure UV lamp.

As a UV irradiating means, although the UV-LED light source 5 is used in the embodiment, it is not limited thereto. A semiconductor laser which is capable of emitting a light beam including any one of wavelengths within a range of ultraviolet rays that can cure the UV ink, as the peak wavelength, may also be employed. That is, the semiconductor laser beam (the beam, for example, including a peak wavelength within 200-420 nm) may be scanned by using a galvano mirror or a polygon mirror so as to irradiate the ink on the recording medium M. According to such a structure, because the semiconductor which forms a light source can be disposed apart from the recording medium M, it is possible to prevent the medium M from being affected by the heat generated from the UV irradiating means.

As the recording medium M, although a shrinkable polyethylene terephthalate film is used in the embodiment, it is not limited thereto. Any component recording medium on which images can be printed, for example, a resin base medium may be applicable.

### Industrial Applicability

As described above, the invention is particularly appropriate to an ink jet printer that can print on various kinds of recording mediums and is required to be small-sized.

## Claims

1. An ink jet printer (1) that carries out printing by depositing UV (ultraviolet) ink, which is curable by irradiation of an ultraviolet ray, during a scanning of a recording head on a shrinkable film (M) comprising a thermo-shrinkable synthetic resin which shrinks by heating, and irradiating ultraviolet rays on the shrinkable film (M),
wherein the printer (1) comprises a recording medium feeding section (3) having a supplying portion (31), a receiving portion (32) and a platen 33 arranged substantially horizontally between the supplying portion and the receiving portion for supporting the backside surface of the recording medium on its upper surface, an UV irradiating unit (5) to enable irradiation of an ultraviolet ray on the ink deposited on the shrinkable film (M), and the UV irradiating unit (5) is an LED (light emitting diode) light source, which enables emitting light the peak wavelength of which includes any one of wavelengths in an ultraviolet range which allow to cure the UV ink, and
wherein the UV irradiating unit (5) has a shape substantially equal to a maximum size which can be set by the inkjet printer in a predetermined area on the shrinkable film (M) to which the UV ink is ejected during one time scanning of the recording head or a larger shape than the predetermined are so as to cover the predetermined area on the shrinkable film (M).

2. The ink jet printer (1) of claim 1, wherein the shrinkable film (M) is a thermo-shrinkable polyethylene terephthalate film.

3. The ink jet printer (1) of claim 1 or 2, wherein the shrinkable film (M) is a long-length film which is in rolled states before and after a printing area.

4. The ink jet printer (1) of any one of claims 1-3, wherein the UV ink is of a cationic polymerization type.

## Patentansprüche

1. Tintenstrahldrucker (1), der das Drucken durch Abscheiden einer UV (Ultraviolett)-Druckfarbe, die durch Bestrahlung mit Ultraviolettstrahlung härtbar ist, während des Scannens eines Aufzeichnungskopfs auf einen schrumpffähigen Film (M), der ein wärmeschrumpffähiges synthetisches Harz, das durch Erhitzen schrumpft, umfasst, und Bestrahlen des schrumpffähigen Films (M) mit Ultraviolettstrahlung durchführt,
wobei der Drucker (1) einen Abschnitt zur Beschickung mit Aufzeichnungsmedium (3) mit einem Zufuhrteil (31), einem Aufnahmeteil (32) und einer Aufspannplatte (33), die im Wesentlichen horizontal zwischen dem Zufuhrteil und dem Aufnahmeteil angeordnet ist, zur Halterung der rückwärtigen Oberfläche des Aufzeichnungsmediums auf deren oberer Oberfläche, eine UV-Bestrahlungseinheit (5), um eine Bestrahlung der auf dem schrumpfbaren Film (M) abgeschiedenen Druckfarbe mit Ultraviolettstrahlung zu ermöglichen, umfasst und die UV-Bestrahlungseinheit (5) eine LED (Leuchtdiode)-Lichtquelle ist, die die Emission von Licht, dessen Peak-Wellenlänge eine beliebige Wellenlänge in einem Ultraviolettbereich, die ein Härten der UV-Druckfarbe ermöglicht, umfasst, ermöglicht, und
wobei die UV-Bestrahlungseinheit (5) eine Form, die im Wesentlichen gleich der maximalen Größe, die durch den Tintenstrahldrucker in einem vorgegebenen Bereich auf dem schrumpffähigen Film (M), auf den die UV-Druckfarbe während eines einmaligen Scannens des Aufzeichnungskopfs ausgestoßen wird, eingestellt werden kann, ist, oder eine größere Form als den vorgegebenen Bereich derart, dass der vorgegebene Bereich auf dem schrumpffähigen Film (M) überdeckt wird, aufweist.

2. Tintenstrahldrucker (1) nach Anspruch 1, wobei der schrumpffähige Film (M) ein wärmeschrumpffähiger Polyethylenterephthalatfilm ist.

3. Tintenstrahldrucker (1) nach Anspruch 1 oder 2, wobei der schrumpffähige Film (M) ein Film langer Länge ist, der sich vor und nach dem Druckbereich in einem aufgerollten Zustand befindet.

4. Tintenstrahldrucker (1) nach einem der Ansprüche 1-3, wobei die UV-Druckfarbe von einem kationischer Polymerisationstyp ist.

## Revendications

1. Imprimante à jet d'encre (1) qui réalise des impressions en déposant une encre UV (ultraviolet), dont le séchage s'effectue par l'application d'un rayonnement ultraviolet, au cours d'un balayage d'une tête d'enregistrement sur un film thermorétractable (M) comprenant une résine synthétique thermorétractable qui se rétracte sous l'application d'une chaleur, et en appliquant un rayonnement ultraviolet sur le film thermorétractable (M),
dans lequel l'imprimante (1) comprend une section d'alimentation de support d'enregistrement (9) comportant une partie d'alimentation (31), une partie réceptrice (32) et une platine (33) disposée substantiellement à l'horizontale entre la partie d'alimentation et la partie réceptrice pour supporter la surface postérieure du support d'enregistrement sur sa surface supérieure, une unité d'émission de rayonnement UV (5) pour permettre l'émission d'un rayonnement ultraviolet vers l'encre déposée sur le film thermorétractable (M), et l'unité d'émission de rayonnement UV (5) est une source de lumière à DEL (diode électroluminescente), qui permet d'émettre une lumière dont la longueur d'onde de crête comprend n'importe quelles longueurs d'onde d'un domaine ultraviolet qui permettent le séchage de l'encre UV, et
dans lequel l'unité d'émission de rayonnement UV (5) a une forme sensiblement égale à une taille maximale qui peut être réglée par l'imprimante à jet d'encre dans une zone prédéterminée sur le film thermorétractable (M) vers laquelle l'encre UV est éjectée pendant un balayage unitaire de la tête d'enregistrement ou une forme plus grande que la zone prédéterminée de manière à couvrir la zone prédéterminée sur le film thermorétractable (M).

2. Imprimante à jet d'encre (1) selon la revendication 1, dans laquelle le film thermorétractable (M) est un film de polyéthylène térephtalate thermorétractable.

3. Imprimante à jet d'encre (1) selon la revendication 1 ou 2, dans laquelle le film thermorétractable (M) est un film de grande longueur qui est dans un état enroulé avant et après une zone d'impression.

4. Imprimante à jet d'encre (1) selon l'une quelconque des revendications 1 à 3, dans laquelle l'encre UV est de type à polymérisation cationique.
